# EUROPÄISCHE PATENTSCHRIFT

(11) **EP 0 944 431 B1**
(45) Veröffentlichungstag und Bekanntmachung des Hinweises auf die Patenterteilung: **02.08.2000**
(21) Anmeldenummer: 97940130.4
(22) Anmeldetag: 26.08.1997
(51) Int. Cl.: B01J 19/24

(54) **VORRICHTUNG ZUR KONTINUIERLICHEN DURCHFÜHRUNG CHEMISCHER REAKTIONEN**
DEVICE FOR CONTINUOUSLY CARRYING OUT CHEMICAL REACTIONS
DISPOSITIF POUR EFFECTUER EN CONTINU DES REACTIONS CHIMIQUES

(30) Priorität: 26.08.1996 DE 19634450
(43) Veröffentlichungstag der Anmeldung: 29.09.1999
(73) Patentinhaber: BASF AKTIENGESELLSCHAFT, 67056 Ludwigshafen (DE)
(72) Erfinder: HERRMANN, Christof, D-68519 Viernheim (DE); HÜBINGER, wolfgang, D-67117 Limburgerhof (DE); KREMESKÖTTER, Jens, D-67063 Ludwigshafen (DE); MINGES, Roland, D-67269 Grünstadt (DE); SCHMIDT-THÜMMES, Jürgen, D-67141 Neuhofen (DE); MORITZ, Hans-Ulrich, D-21227 Bendestorf (DE); SCHMIDT, Wolfgang, D-33098 Paderborn (DE); RIDDER, Maren, D-20251 Hamburg (DE)
(74) Vertreter: Kinzebach, Werner, Dr.
(86) Internationale Anmeldenummer: EP9704654
(87) Internationale Veröffentlichungsnummer: WO9808602

(56) Entgegenhaltungen:
- EP-A- 0 041 204
- EP-A- 0 117 492
- FR-A- 2 698 559
- WALTER MÜLLER: "Ein neuer Rohrreaktor für hochzähe Medien." CHEMIE INGENIEUR TECHNIK, Bd. 54, Nr. 6, Juni 1984, Seiten 610-611, XP002050666

## Beschreibung

Die vorliegende Erfindung betrifft einen gekrümmten, rohrförmigen Durchflußreaktor mit im wesentlichen kreisförmigem oder ellipsoidem Querschnitt, die Verwendung dieser Vorrichtung zur kontinuierlichen Durchführung chemischer Reaktionen und ein Verfahren zur kontinuierlichen Polymerisation unter Verwendung der erfindungsgemäßen Vorrichtung.

Bei der Durchführung chemischer Reaktionen in industriellem Maßstab ist die kontinuierliche Reaktionsführung häufig vorteilhafter als die diskontinuierliche. Dies gilt vor allem dann, wenn große Volumina zu bewältigen sind und bei diskontinuierlicher Reaktionsführung eine uneinheitliche Produktqualität von Charge zu Charge zu erwarten ist. Allerdings ist es häufig schwierig, die kontinuierliche Reaktionsführung in die Praxis umzusetzen. Eines der Gebiete, bei dem dies der Fall ist, ist die Emulsions- und Suspensionspolymerisation von ethylenisch ungesättigten Monomeren.

Es hat nicht an Versuchen gefehlt, die kontinuierliche Reaktionsführung auf diesem Gebiet in der Praxis zu realisieren. Die ersten Patente zur kontinuierlichen Emulsionspolymerisation wurden bereits 1937 und 1938 von der I. G. Farbenindustrie eingereicht (GB 517,951 und FR 847,151). Inzwischen sind zahlreiche Ansätze zur kontinuierlichen Emulsionspolymerisation bekannt. Am häufigsten wird die Anwendung eines kontinuierlich betriebenen Rührkesselreaktors beschrieben, für eine Übersicht siehe beispielsweise Enzyclopedia of Polymer Science and Engineering, 1986, Band 6, Seiten 11 bis 18. Eine Emulsionspolymerisation in derartigen Reaktoren führt zu einer breiten Teilchengrößenverteilung und die Einstellung eines stationären Zustandes dauert relativ lange oder gelingt überhaupt nicht. Außerdem besteht auf Grund der Scherkrafteinwirkung durch den Rührer eine erhöhte Neigung zur Koagulation des Polymerisats, das sich dann sehr leicht am Rührer oder an Reaktoreinsätzen absetzt.

Eine besondere Ausgestaltung der erwähnten Rührreaktoren ist in der DE-A-1 071 341 beschrieben. Der Reaktor, ein zylindrisches Rohr, ist mit an einer Welle sitzenden Scheiben ausgestattet, die zur Ausbildung der sogenannten Taylor-Ringe führen, wenn der Rührer in Umdrehung versetzt wird. Damit wird vor allem die Vermischung senkrecht zur Strömungsrichtung und damit die Raum-Zeit-Ausbeute verbessert. Reaktoren dieser Art weisen stets bewegte Teile auf. Dies hat den Nachteil, daß konstruktive Maßnahmen zur Lagerung und Abdichtung der Welle erforderlich sind. Außerdem bilden sich Polymerisatanbackungen und -ablagerungen auf Grund von im System vorhandenen oder gebildeten Gasblasen, die sich verstärkt an der Welle und in strömungsarmen Zonen ansammeln und dort eine Koagulation des Polymerisats auslösen. Schließlich treten auf Grund der rotierenden Scheiben Scherkräfte auf, die ebenfalls zu einer Koagulation des Polymerisats führen.

Eine weitere Verbesserung stellen Reaktoren dar, die aus zwei konzentrischen Zylindern bestehen, wobei der innere und/oder äußere Zylinder in Rotation versetzt wird. Je nach Rotations- und Strömungsgeschwindigkeit bilden sich unterschiedliche stabile Strömungsmuster aus, die von einer laminaren Couette-Strömung über die Ausbildung Taylor'scher Ringwirbel bis zu einer turbulenten Vortex-Strömung reichen können. In Polymer International 30 (1993), 203-206 ist ein kontinuierlicher Couette-Taylor-Vortex-Reaktor und dessen Anwendung zur kontinuierlichen Emulsionspolymerisation beschrieben. Man erhält dabei Latexpartikel mit relativ enger Teilchengrößenverteilung. In Chemical Engineering Science, Volume 50, Seiten 1409-1416 (1995) wird die Emulsionspolymerisation von Styrol in einem kontinuierlichen Taylor-Vortex-Flow-Reaktor beschrieben. Da bei Reaktoren dieser Art kein konventioneller Rührer verwendet wird, sind sie besonders brauchbar zur Herstellung von Polymerdispersionen, die bei Scherkrafteinwirkung besonders stark zur Koagulation neigen. Außerdem treten ähnliche Nachteile auf, wie bei dem in der DE-A-1 071 341 beschriebenen Reaktor.

Eine Alternative zu den Rührreaktoren ist die Verwendung gepulster, gepackter Kolonnen, wie in Chem. Eng. Sci. Vol. 47, 2603-2608 (1992) und EP-A-336 469 beschrieben. Auf diese Weise können Styrol oder Vinylacetat kontinuierlich polymerisiert werden. Kolonnen dieser Art verschmutzen und verstopfen jedoch sehr leicht.

Eine weitere Alternative zu den erwähnten Rührkesselreaktoren bzw. gerührten Rohrreaktoren sind im allgemeinen einfache "leere" Rohrreaktoren, d.h. Rohrreaktoren ohne zusätzliche Einbauten wie einen statischen Mischer oder einen Rührer. Aufgrund der großen spezifischen Oberfläche eines Rohrs sind sie besonders vorteilhaft bei stark exothermen Polymerisationen. So ist beispielsweise die kontinuierliche Suspensionspolymerisation in der DE-A-2342788 und DE-A-880938 beschrieben. Weiter gibt es zahlreiche Untersuchungen, die sich mit der Emulsionspolymerisation in einem Rohrreaktor, sei es bei laminarer oder sei es bei turbulenter Strömung, befassen. Ein Überblick über diese Arbeiten findet sich in Reactors, Kinetics and Catalysis, AIChE Journal, 1994, Vol. 40, 73-87.

Eines der Hauptprobleme bei der Durchführung einer Emulsionspolymerisation in einem Rohrreaktor ist das Verstopfen der Rohre durch Koagulat, was besonders im turbulenten Strömungsbereich ein Problem ist. Man hat daher versucht, durch zusätzliche Maßnahmen und spezielle Reaktionsführungen die Koagulatbildung zu vermeiden, beispielsweise mit Hilfe von gepulsten Rohrreaktoren, siehe die zuletzt erwähnte Publikation oder durch Optimierung der Reaktordimensionen und des Materials für die Rohre, siehe ACS Symp. Ser. 104, 113 (1979). Patentpublikationen, in denen Rohrreaktoren zur Emulsionspolymerisation beschrieben sind, sind DE-A- 26 17 570, DD-A-238 163, DD-A-234 163, DD-A-233 573, DD-A-233 572, DE-A-33 02 251 und CZ-A-151 220. Die FR-A-842 829 und die EP-A-633 061 offenbaren Rohrreaktoren zur kontinuierlichen Polymerisation, bei denen gekrümmte Rohrsegmente mit langen geraden Rohrsegmenten verbunden sind. Reaktoren dieser Art haben eine breite Verweilzeitverteilung der Volumeneinheiten zur Folge.

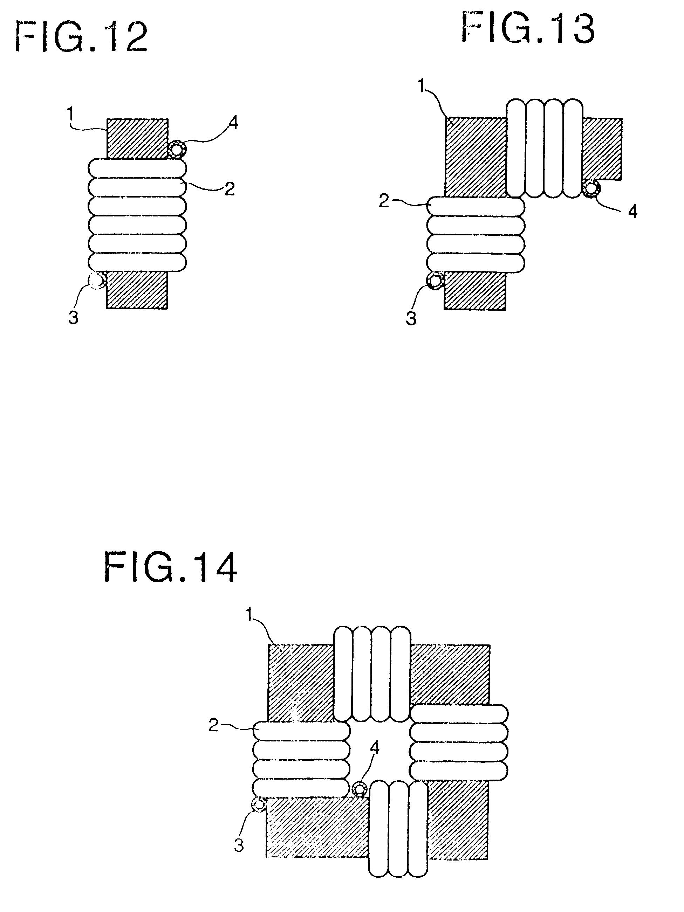

Rohrreaktoren kommen in den meisten Fällen in Form helikal gewickelter Reaktoren zur Anwendung, siehe die beiden zuletzt genannten Publikationen. Die Strömungsverhältnisse in gewickelten Rohrreaktoren sind besonders gut untersucht. Aufgrund der in einem helikal gewickelten Rohr auftretenden Fliehkräfte kommt es zur Ausbildung einer Sekundär-Strömung senkrecht zur Hauptströmungsrichtung. Diese Sekundär-Strömung wurde zuerst von Dean beschrieben und wird daher als Dean-Wirbel bezeichnet. Die Dean-Wirbel in einem helikal gewickelten Rohr begünstigen eine enge Verweilzeitverteilung der Volumeneinheiten und ergeben bei laminarer Strömung höhere Wärme- und Massenübertragungskoeffizienten im Vergleich zu einem geraden Rohr mit entspechender laminarer Strömung. Eine weitere Verbesserung wird durch eine abrupte Richtungsänderung der Zentrifugalkräfte, siehe Saxena in AIChE Journal Vol. 30, 1984, Seiten 363-368 (vgl. auch Figur 13 und 14) erzielt. Die Richtungsänderung wird durch ein Abknicken der helikalen Wicklung um 90° bewirkt. Saxena et al haben durch insgesamt 57 Knicke die engste bekannte Verweilzeitverteilung in einer Vorrichtung mit laminarer Strömung erzielen können. Durch die laminare Strömung wird das Reaktionsvolumen klein gehalten und es treten nur geringe Scherkräfte auf. Auch bei laminarer Strömung wird hier ein hoher Wärmeübergangskoeffizient erreicht.

Trotz aller Untersuchungen und Kenntnisse über die Reaktionsführung im Zusammenhang mit dispersen Systemen in Rohrreaktoren konnten sich diese in der Praxis bisher noch nicht durchsetzen. Der Grund dafür liegt darin, daß einerseits das Verstopfungsproblem bei Rohrreaktoren noch nicht zufriedenstellend gelöst ist und daß andererseits das von Saxena et al beschriebene Modell mit abknickenden helikalen Wicklungen in der Praxis entscheidende Nachteile aufweist, wie schwierige Herstellung, großer Raumbedarf, und die Tatsache, daß absteigende Windungen mit absteigender Strömung vorhanden sind, was zur Beeinträchtigung der Produktivität führen kann. Insbesondere ist die Bildung von Gasblasen aus Monomeren oder Luft zu beobachten, was eine stärkere Koagulatbildung und Störung des Polymerisationsablaufs, sowie eine ungleichmäßige Strömung und eine Änderung der Verweilzeit der Flüssigphase zur Folge hat. Außerdem besteht die Gefahr, daß sich in den absteigenden Windungen die spezifisch schwereren Anteile des Reaktionsgemisches, z.B. die in der Dispersion vorhandenen Partikel verstärkt absetzen.

Der vorliegenden Erfindung liegt daher die Aufgabe zugrunde, eine Vorrichtung und ein Verfahren zur kontinuierlichen Durchführung von chemischen Reaktionen in Flüssigphase, insbesondere von Polymerisationen, zur Verfügung zu stellen, die gegenüber dem Stand der Technik verbessert sind und eine einfache Durchführung der Reaktionen erlauben.

Überraschenderweise wurde nun gefunden, daß diese Aufgabe gelöst wird, wenn man einen Rohrreaktor mit mehreren aufeinanderfolgenden Krümmungen mit alternierender Krümmungsrichtung verwendet.

Gegenstand der vorliegenden Erfindung ist daher ein gekrümmter, rohrförmiger Durchflußreaktor mit im wesentlichen kreisförmigem oder ellipsoidem Querschnitt, der dadurch gekennzeichnet ist, daß er mehrere, vorzugsweise unmittelbar aufeinanderfolgende, Krümmungen mit alternierender Krümmungsrichtung aufweist, wobei eine Umkehr der Krümmungsrichtung spätestens dann erfolgt, wenn die ab Beginn einer Krümmung durchlaufene Strecke des Schwerpunktes der Rohrquerschnittsfläche das 200fache des Rohrdurchmessers beträgt, wobei die Krümmung bis zu drei Umläufe um die Krümmungsachse umfassen kann.

Unter Rohrdurchmesser ist bei ellipsoidem Querschnitt des Reaktors der Mittelwert zwischen großer und kleiner Achse zu verstehen.

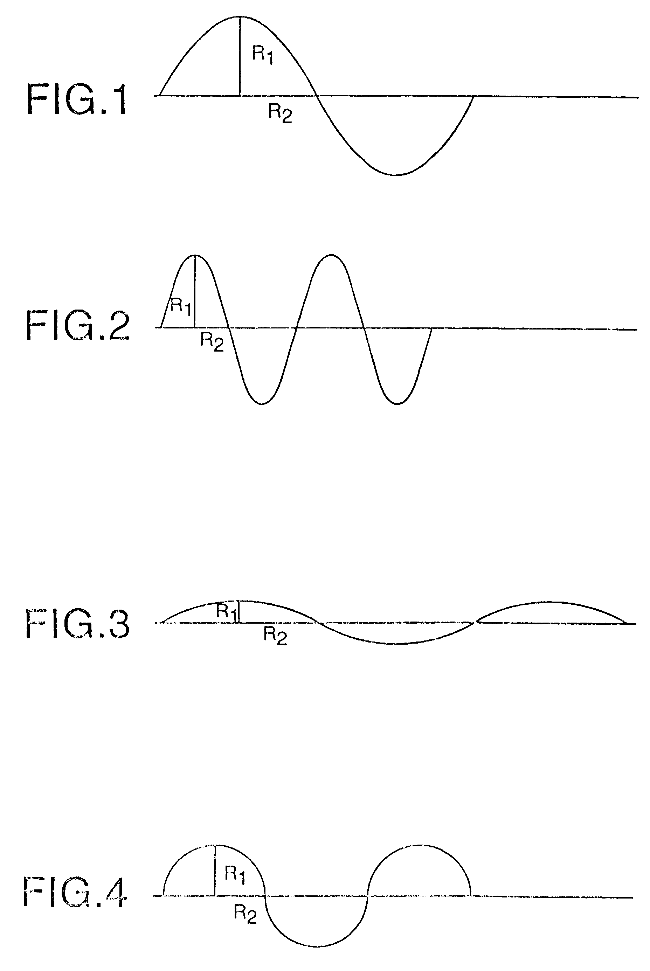

Unter Krümmungen mit alternierender Krümmungsrichtung ist hier eine Abfolge von gekrümmten Rohrsegmenten zu verstehen, wobei das jeweils nächste Rohrsegment (Abschnitt des Rohres zwischen zwei aufeinanderfolgenden Krümmungsumkehrungen, z.B. die Abschnitte zwischen zwei Achsenschnittpunkten in den Fig. 1 bis 4) in eine andere, vorzugsweise die entgegengesetzte Richtung des vorhergehenden führt, d.h. es erfolgt mit jedem gekrümmten Rohrsegment eine Änderung, vorzugsweise eine Umkehr der Krümmungsrichtung. Durch diese Ausgestaltung des Reaktors wird eine möglichst gleichmäßige Strömung erzielt und die Verweilzeitverteilung der Volumeneinheiten damit verengt. Außerdem erlaubt die Ausgestaltung des Reaktors die Anfertigung von Wicklungen mit einer räumlich besonders günstigen, d.h. kompakten, Anordnung, so daß sie für die industrielle Praxis besonders geeignet sind (nähere Ausführungen zu den sich daraus ergebenden Strukturen folgen unten). Mit dem erfindungsgemäßen Reaktor läßt sich eine hohe Bodenstein-zahl realisieren, die im allgemeinen ≥ 10 und vorzugsweise ≥ 100 ist und bis zu 1000 und mehr betragen kann. Sie ist ein Maß für die Breite der Verweilzeitverteilung, je höher sie ist, um so enger und symmetrischer ist die Verweilzeitverteilung.

Vorzugsweise erfolgt die Umkehr der Krümmungsrichtung spätestens dann, wenn die ab Beginn einer Krümmung durchlaufene Strecke des Schwerpunkts der Rohrquerschnittsfläche das 150-fache, insbesondere 100-fache, vorzugsweise 80-fache, besonders bevorzugt das 50-fache, 30-fache oder 25-fache des Rohrdurchmessers beträgt. Diese Strecke beträgt im allgemeinen mindestens das 5-fache des Rohrdurchmessers und insbesondere liegt sie im Bereich des 10 bis 150-fachen, insbesondere 10 bis 100-fachen, vorzugsweise 10 bis 80-fachen und besonders bevorzugt 10 bis 50-fachen, 10 bis 40-fachen oder 10 bis 30-fachen des Rohrdurchmessers.

Eine Krümmung kann nicht nur einen Teilumlauf, sondern auch einen und bis zu zwei oder drei Umläufe um die Krümmungsachse (Achse durch den Schnittpunkt von R₁ und R₂, siehe Fig. 1 bis 4) umfassen. Der Winkel, den der Normalvektor der Hauptströmungsrichtung einer Krümmung bis zur Änderung der Krümmungsrichtung überstreicht, ist somit im allgemeinen ≤ 1080°, vorzugsweise ≤ 720° und besonders bevorzugt ≤ 360°.

Vorzugsweise handelt es sich um im wesentlichen sinusoidale Krümmungen. Unter sinusoidalen Krümmungen sind im vorliegenden Fall alle Arten von, vorzugsweise periodisch wiederkehrenden, Krümmungen im wesentlichen in einer Ebene zu verstehen. Beispiele hierfür sind die in den Figuren 1 bis 4 dargestellten Krümmungen. Es ist ersichtlich, daß das Verhältnis von R₁/R₂, d.h. das Verhältnis von Amplitude zu Periodenlänge/4 in einem breiten Bereich liegen kann. Vorzugsweise liegt es jedoch im Bereich von 5:1 bis 1:50, insbesondere 3:1 bis 1:5 und besonders bevorzugt ist es 1:1. Außerdem ist ersichtlich, daß nicht nur solche Krümmungen erfaßt sein sollen, bei denen die Tangente im Wendepunkt einen von 90° verschiedenen Winkel mit der Achse bildet, sondern auch solche, bei denen der erwähnte Winkel 90° ist, d.h. aneinandergereihte halbkreisförmige Rohrsegmente, die besonders bevorzugt sind.

Der Krümmungsradius der gekrümmten Rohrsegmente beträgt vorzugsweise das 0,5- bis 100-fache, vorzugsweise das 1 bis 80-, 2 bis 50- oer 2 bis 20-fache des Durchmessers der Rohrquerschnittsfläche.

Die Abmessungen des Reaktors sind im allgemeinen so, daß das Verhältnis von Länge zu Durchmesser im Bereich von 100:1 bis 1 000 000:1, vorzugsweise 1 000 : 1 bis 100 000 : 1 bzw. 50 000 : 1 liegt.

Gegebenenfalls kann eines oder mehrere der gekrümmten Rohrsegmente durch gerade Rohrsegmente verbunden sein. Das Verhältnis von gerader zu gekrümmter Rohrstrecke ist dann ≤5, vorzugsweise ≤2, insbesondere ≤1 und besonders bevorzugt ≤0,5 bzw. ≤0,25.

Die Vorrichtung kann auch aus mehreren Reaktoreinheiten aufgebaut sein, wobei der Reaktor in jeder Einheit unterschiedliche Geometrie und/oder Abmessungen und/oder Krümmungsradien aufweisen kann. Beispielsweise kann in einer Einheit der Rohrdurchmesser erhöht werden, um eine geringere Strömungsgeschwindigkeit zu realisieren oder es kann der Krümmungsradius variiert werden, um spezielle Produkteigenschaften einzustellen.

Der Querschnitt des Reaktors ist vorzugsweise kreisförmig oder ellipsoid. Dazu zählen auch modifizierte kreisförmige oder ellipsoide Querschnitte, z.B. Querschnitte, die sich durch Runden der Ecken eines Quadrats oder eines Rechteckes ergeben. Im Falle von Drallrohren (siehe unten) ist die Grundform des Reaktorrohrs im wesentlichen kreisförmig oder ellipsoid.

Bei ellipsoidem Querschnitt liegt das Verhältnis von großer Halbachse zu kleiner Halbachse im allgemeinem im Bereich von 5:1 bis 1:1, insbesondere im Bereich von 2:1 bis 1:1.

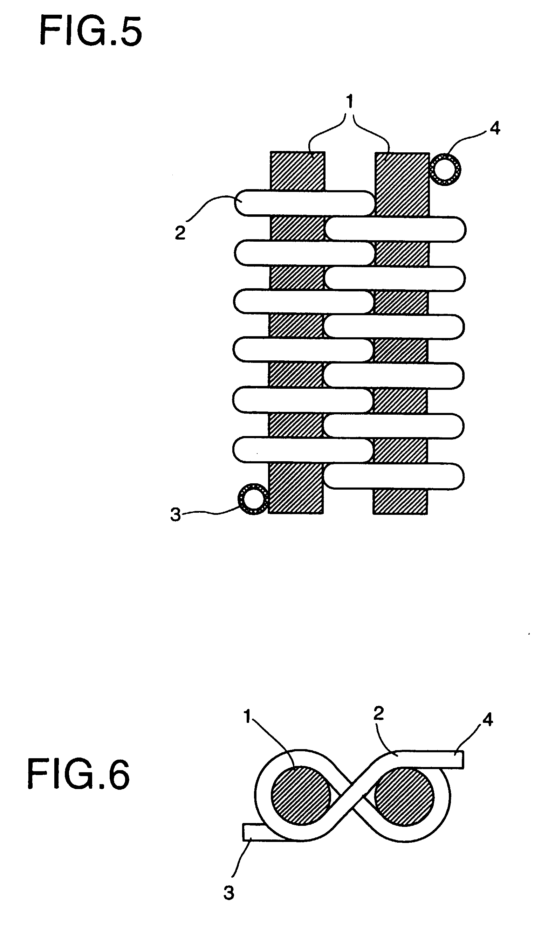

Gemäß einer bevorzugten Ausführungsform ist die Vorrichtung als, von der eintretenden Strömung her gesehen, aufsteigende und einlagige Wicklung um mindestens zwei Achsen ausgebildet. Die Achsen können einen Winkel zueinander bilden, vorzugsweise sind sie jedoch im wesentlichen parallel. Diese Achsen können bei nicht selbsttragender Wicklung vorzugsweise durch Rohre oder Stäbe, die rund oder eckig sein können, realisiert werden. Der Begriff "Wicklung um mindestens zwei Achsen" wird hier nur zur Veranschaulichung gebraucht. Es ist nicht erforderlich, daß die Achsen bei der Anwendung auch realisiert werden, z.B. in Form von Rohren oder Stäben. Bei einer Wicklung um 2 parallele Achsen ergibt sich z.B. die in den Figuren 5, 6 und 9 gezeigte Anordnung.

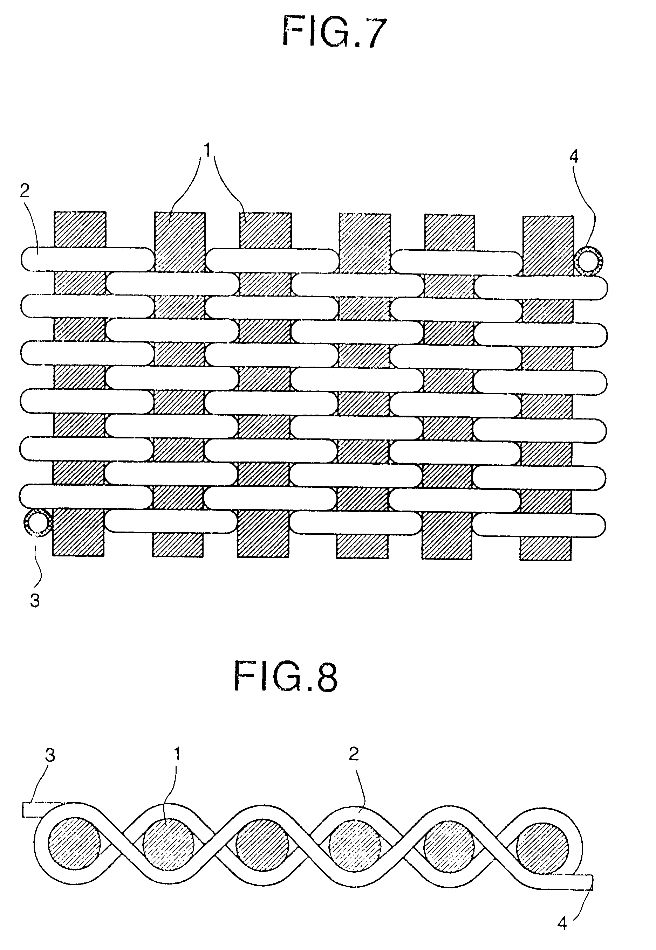

Wenn man eine Wicklung um mehrere, bevorzugt in einer Ebene angeordnete Achsen vornimmt, resultiert eine bandartige bzw. wandartige Ausgestaltung, wie in den Figuren 7 und 8 gezeigt.

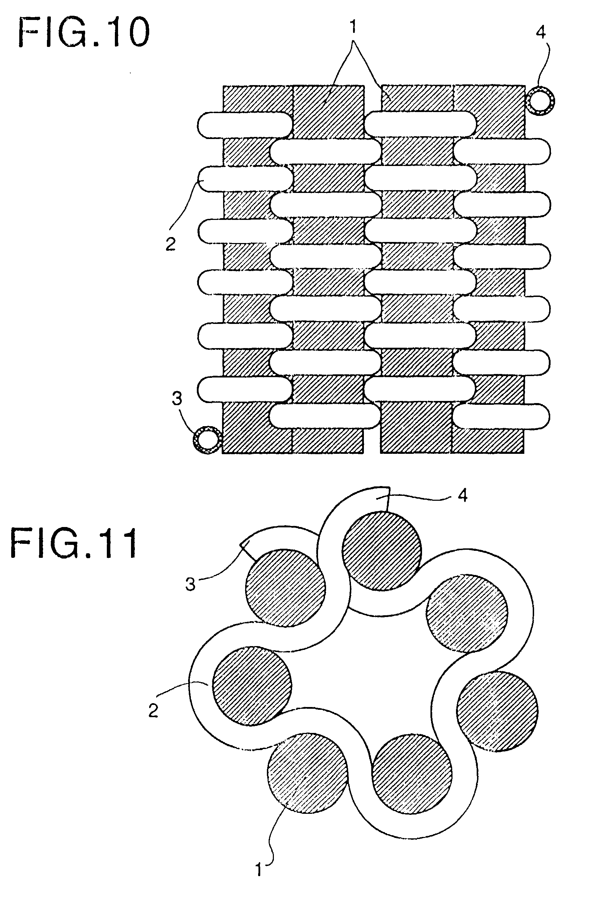

Schließlich ist es auch möglich, eine Wicklung um mehrere durch die Ecken eines Polygons, insbesondere eines gleichseitigen Polygons, und senkrecht zu dessen Fläche verlaufende im wesentlichen parallele Achsen vorzunehmen. Das Polygon kann eine gerade und vorzugsweise eine ungerade Anzahl von Ecken aufweisen, und zwar mindestens 3 oder 5. Ein Siebeneck hat sich als besonders zweckmäßig erwiesen (siehe Figuren 10 und 11). Eine polygonale Wicklung läßt sich durch Krümmungen entlang abgewinkelter, zu einem Polygon zusammengefügter Achsen (senkrecht zu den erwähnten vorzugsweise parallelen Achsen) verstehen.

Der Außenabstand der Achsen, um die die Wicklung geführt wird, kann in einem weiten Bereich variiert werden. Im allgemeinen beträgt er das 1- bis 10-fache, vorzugsweise 1- bis 5-fache und insbesondere 1- bis 3-fache des Durchmessers des Reaktorrohrs, wobei der einfache bis doppelte Abstand besonders bevorzugt ist.

Außerdem wird die Wicklung noch durch die Ganghöhe bestimmt. Sie beträgt im allgemeinen das 1- bis 10-fache, insbesondere das 1- bis 3-fache des Reaktordurchmessers (bei kreisförmigem Querschnitt) bzw. bei ellipsoidem Reaktorquerschnitt der Achse, die in Gangrichtung zeigt.

Die erwähnten Wicklungen sind eine räumlich besonders günstige Anordnung und erlauben eine kompakte Ausführung der erfindungsgemäßen Vorrichtung. Sie sind leicht transportabel, was sich besonders bei Wartungsarbeiten als Vorteil erweist. Die Zahl der übereinander angeordneten Wicklungen ist beliebig, sie richtet sich nach den jeweiligen Anforderungen.

Der gekrümmte Reaktor kann, je nach den Erfordernissen der durchzuführenden Reaktion, aus Metall, einer Metalllegierung, Glas oder einem Kunststoff gefertigt sein. Hier bestehen keinerlei Beschränkungen, das Rohr muß lediglich beständig gegenüber den Reaktionsteilnehmern und unter den Reaktionsbedingungen stabil sein. Wenn der Reaktor aus Metall besteht, kann er beispielsweise aus Kupfer oder Kupferlegierungen, Stahl oder Edelstahl jeglicher Art gefertigt sein.

Wenn der Reaktor aus einem Kunststoff gefertigt ist, sind fluorhaltige Kunststoffe, z.B. Tetrafluorethylen, sowie Polyethylen, Polypropylen oder Polyvinylchlorid bevorzugt.

Der Reaktor kann aus Profilrohren, insbesondere Drallrohren oder gewellten Rohren, gefertigt sein oder eine Innenbeschichtung aufweisen. Diese wird, je nach den Erfordernissen der durchzuführenden Reaktion, säurefest, alkalifest oder lösungsmittelfest etc. gewählt. Beispiele für Innenbeschichtungen sind insbesondere fluorhaltige Kunststoffe, wie Tetrafluorethylen, Polyethylen oder Polypropylen. Außerdem kann das Rohrinnere durch chemische Behandlung inertisiert sein, z.B. passiviert durch Behandlung mit Salpetersäure, elektropoliert oder mechanisch poliert.

Der erfindungsgemäße Reaktor kann gewünschtenfalls Zusatzeinrichtungen aufweisen oder mit anderen Apparaturen kombiniert werden. Zweckmäßigerweise können entlang des gekrümmten Reaktors an einer oder mehreren Stellen Mittel zum Einspeisen von Chemikalien, beispielsweise Katalysatoren, Reagenzien, Lösungsmittel etc. und/ oder zur Reinigung, z.B. durch Verwendung von Molchsystemen vorgesehen sein.

Außerdem kann der Reaktor Pulsationsmittel, z.B. Pumpen, umfassen, um eine gepulste Reaktionsführung zu bewerkstelligen. Weiter kann zu Beginn oder an beliebiger Stelle entlang des gekrümmten Rohres eine Einrichtung vorgesehen sein, mit der, z.B. zum Zweck einer Separierung, Gasblasen eines inerten Gases, wie Stickstoff und/oder Molche eingespeist werden können. Ferner können auf Teilsegmenten des gekrümmten Reaktors, die in der Regel 10 % der Reaktorstrecke nicht übersteigen, übliche Mischelemente vorgesehen sein, beispielsweise Füllkörper, statische oder dynamische Mischer.

Im allgemeinen sind entlang des gekrümmten Reaktors auch Meßstellen und Einrichtungen zur Probenahme vorgesehen.

Der Reaktor umfaßt im allgemeinen auch Mittel zum Heizen oder Kühlen des durchfließenden Mediums. Hierzu kann ein heiz- oder kühlbarer Behälter, der gegebenenfalls in Zonen unterteilt ist, brauchbar sein, der den Rohrreaktor ganz oder teilweise umschließt, um die Temperatur in der gewünschten Weise zu kontrollieren. Es ist auch möglich, das Heiz- oder Kühlmedium durch die Rohre fließen zu lassen, um die der Rohrreaktor gewickelt ist. Der Reaktor kann auch mit einer Mantelheizung oder -kühlung ausgestattet sein.

Schließlich kann der Reaktor in beliebiger Weise mit anderen Apparaturen, die vor- und/oder parallel und/oder nachgeschaltet sein können, kombiniert werden.

Der erfindungsgemäße Reaktor ist zur kontinuierlichen Durchführung von chemischen Reaktionen in Flüssigphase brauchbar. Beispiele für derartige chemische Reaktionen sind Polymerisationen, Depolymerisationen, Oxidations- und Reduktionsreaktionen etc. Außerdem ist der Reaktor brauchbar zur kontinuierlichen Herstellung von Mischungen für die Systeme fest/flüssig, flüssig/flüssig und flüssig/gasförmig. Ein Beispiel hierfür ist das Vermischen von Flüssigkeiten vor Sprühköpfen. Ferner läßt sich der Reaktor als Wärmetauscher für Flüssigkeiten und Gas einsetzen.

Die Temperatur bei der der Reaktor betrieben werden kann, wird nur durch die verwendeten Materialien begrenzt.

Besonders brauchbar ist der Reaktor jedoch zur kontinuierlichen Polymerisation. Gegenstand der vorliegenden Erfindung ist daher auch ein Verfahren zur kontinuierlichen Polymerisation unter Verwendung des erfindungsgemäßen Reaktors. Unter Polymerisation ist hier sowohl die radikalische, ionische (anionische und kationische) und thermische Polymerisation ethylenisch ungesättigter Monomere einschließlich der sogenannten lebenden Polymerisation sowie die Polykondensation und Polyaddition zu verstehen. Sie kann in homogener oder heterogener Phase unter allen zur Polymerisation führenden Bedingungen durchgeführt werden. Beispiele für Polykondensation und Polyaddition sind die Polyester- und Polyurethanherstellung. Vorzugsweise ist der Reaktor zur radikalischen Polymerisation brauchbar. Dazu zählen Lösungs-, Fällungs-, Masse- und vorzugsweise Suspensions- und Emulsionspolymerisation, einschließlich Mini-, Mikro- und inverser Emulsionspolymerisation.

Die Durchführung der Polymerisationen ist dem Fachmann im Prinzip bekannt. Nähere Angaben hierzu finden sich beispielsweise in Houben-Weyl, Band XIV, makromolekulare Stoffe, Georg Thieme Verlag, Stuttgart, 1961.

Zur Polymerisation hat es sich als besonders zweckmäßig erwiesen, bei einer Strömung, charakterisiert durch eine Reynolds-Zahl von 1 - 10000, vorzugsweise 10 - 1000, häufig 20 - 100 zu arbeiten. Die Reaktionstemperatur liegt im allgemeinen im Bereich von 5 bis 250°C, insbesondere 5 bis 150°C, bevorzugt 30 bis 150°C und besonders bevorzugt 50 bis 100°C. Die Polymerisation kann bei Normaldruck oder unter Druck durchgeführt werden. Am Rohrende kann zusätzlich ein Unterdruck eingestellt werden.

Für das erfindungsgemäße Verfahren können alle unter den Bedingungen der radikalischen Polymerisation polymerisierbaren ethylenisch ungesättigten Monomere eingesetzt werden. Die für die Polymerisation erforderlichen Komponenten können am Beginn oder entlang des Reaktors je nach Bedarf zugespeist werden. Beispielsweise können bei der Herstellung eines Copolymerisats das Comonomer oder die Comonomere zusammen mit dem Hauptmonomer oder andere Komponenten am Beginn oder entlang des gekrümmten Reaktors an verschiedenen Stellen zugespeist werden.

Für das erfindungsgemäße Verfahren brauchbare Monomere sind C₂-C₆-Mono- und Diolefine, C₃-C₆-monoethylenisch ungesättigte Mono- oder Dicarbonsäuren, deren Salze oder deren Mono- oder Diester mit C₁-C₁₈-Alkanolen oder -Diolen oder deren Amide und N-Mono- oder N,N-Di-C₁-C₁₈-alkylamide oder -hydroxyalkylamide, (Meth)acrylnitril, monoethylenisch ungesättigte Sulfonsäuren und/oder deren Salze, vinylaromatische Verbindungen, Vinyl-C₁-C₁₈-Alkylether, Vinyl-C₁-C₁₈-Alkylester, N-Vinyllactame oder Vinylhalogenide sowie Gemische verschiedener Monomere eines Typs und/oder verschiedener Typen.

Beispiele für geeignete Monomere sind Ethylen, Propylen, Butadien, Acrylsäure, Methacrylsäure, Maleinsäure, Fumarsäure, Itaconsäure, Ester der Acrylsäure oder Methacrylsäure mit Methanol, Ethanol, n-Propanol, Isopropanol, n-Butanol, Isobutanol, sec-Butanol, t-Butanol, Pentanol, Hexanol, 2-Ethylhexanol, Octanol, Decanol, Dodecanol oder Stearylalkohol, Acrylamid, Methacrylamid, Acrylnitril, Methacrylnitril, Styrol, α-Methylstyrol, Vinylethylether, Vinylacetat, Vinylpropionat, N-Vinylpyrrolidon, Vinylchlorid, Vinylidenchlorid, α-Phenylstyrol, Vinylpyridin, das Natriumsalz der Vinylsulfonsäure, Acrylamidopropansulfonsäure oder deren Alkalisalze oder das Natriumsalz des sulfonierten Styrols.

Gewünschtenfalls können Vernetzungsmittel eingesetzt werden, wie die oben erwähnten Mono- oder Diester einer C₃-C₆-monoethylenisch ungesättigten Mono- oder Dicarbonsäure mit einem C₁-C₁₈-Hydroxyalkanol oder -Diol oder N-Mono- oder N,N-Di-C₁-C₁₈-Alkylamid, Divinylbenzol, siliciumhaltige Vernetzungsmittel und dergleichen.

Zur Kontrolle des Molekulargewichts können übliche Regler eingesetzt werden, beispielsweise Mercaptoverbindungen, wie Mercaptoethanol, Mercaptopropanol, Mercaptobutanol, Mercaptoessigsäure, Mercaptopropionsäure, Mercaptotrimethoxisilan, Butylmercaptan und t-Dodecylmercaptan. Geeignet sind auch organische Halogenverbindungen, wie Tetrachlorkohlenstoff oder Bromtrichlormethan. Die Menge an Regler liegt im allgemeinen im Bereich von 0,01 bis 5 Gew.-%, bezogen auf die zu polymerisierenden Monomere.

Als radikalische Polymerisationsinitiatoren kommen alle diejenigen in Betracht, die in der Lage sind, radikalische Polymerisationen auszulösen. Es kann sich sowohl um Peroxide, beispielsweise Alkalimetallperoxodisulfate als auch um Azoverbindungen handeln. Auch kombinierte Systeme können verwendet werden, die aus wenigstens einem organischen oder anorganischen Reduktionsmittel und wenigstens einem organischen oder anorganischen Oxidationsmittel, vorzugsweise einem Peroxid und/oder Hydroperoxid zusammengesetzt sind. Die Menge an Initiatoren beträgt im allgemeinen 0,01 bis 5 Gew.-%, insbesondere 0,1 bis 2 Gew.-%, bezogen auf die Gesamtmenge der zu polymerisierenden Monomeren.

Die Suspensions- oder Emulsionspolymerisation wird in Gegenwart geeigneter Emulgatoren und Schutzkolloide durchgeführt. Diese Substanzen werden üblicherweise in Mengen bis zu 10 Gew.-%, vorzugsweise 0,5 bis 5 Gew.-% und insbesondere 0,5 bis 3 Gew.-%, bezogen auf die zu polymerisierenden Monomere, eingesetzt.

Geeignete Schutzkolloide sind beispielsweise Polyvinylalkohole, Cellulosederivate oder Copolymerisate auf Basis von Vinylpyrrolidon. Geeignete Emulgatoren sind insbesondere anionische und nicht-ionische Emulgatoren, wie ethoxylierte Mono-, Di- und Trialkylphenole, Ethoxylate langkettiger Alkanole, Alkali- und Ammoniumsalze von Alkylsulfaten, von Schwefelsäurehalbestern ethoxylierter Alkanole und ethoxylierter Alkylphenole, von Alkylsulphonsäuren und von Alkylarylsulphonsäuren. Eine ausführliche Beschreibung von Schutzkolloiden und Emulgatoren findet sich in Houben-Weyl, Methoden der Organischen Chemie, Band XIV/1, makromolekulare Stoffe, Georg-Thieme Verlag, Stuttgart, 1961, Seiten 192 - 208 und 411 bis 420.

Die Durchführung der Polymerisation erfolgt in der Regel so, daß zunächst die kontinuierliche Phase vorgelegt wird, d.h. der Reaktor wird mit der kontinierlichen Phase gefüllt. Anschließend wird eine Emulsion des Monomers (oder der Monomere) in der kontinuierlichen Phase zudosiert. Der Initiator kann separat oder der Emulsion kurz vor dem Reaktor zudosiert werden.

Die Polymerisation kann auch unter Verwendung eines Saatlatex durchgeführt werden, der separat oder im ersten Teil des Reaktors hergestellt werden kann. Im letzteren Fall werden die zu polymerisierenden Monomere dann nach Bildung der Saat zugespeist.

Falls gewünscht, kann eine physikalische oder chemische Nachbehandlung der Polymerdispersion nach Verlassen des Reaktors oder noch im Reaktor unter üblichen Bedingungen erfolgen. Dies kann z.B. zur Entfernung oder Reduzierung nicht auspolymerisierter Monomeranteile und/oder Nebenprodukten der Polymerisation oder Verunreinigungen der Einsatzstoffe dienen. Denkbar ist auch die Einstellung eines gewünschten pH-Wertes durch Zugabe eines geeigneten Neutralisationsmittels, sowie die Zugabe üblicher Additive wie Antioxidantien, Bioziden, Vernetzungsmitteln, Farbstoffen und ähnlichem.

Das erfindungsgemäße Verfahren ist brauchbar zur Herstellung von Polymerdispersionen mit einem breiten Polymermassenanteil. Vorzugsweise liegt der Polymermassenanteil im Bereich von 25 bis 75, insbesondere 50 bis 75 Vol.-%. Auch die Viskosität der Polymerdispersionen kann in einem breiten Bereich variieren. Im allgemeinen beträgt sie weniger als 800 mPa.s und vorzugsweise weniger als 500 mPa.s (bestimmt nach DIN 53019). Besonders brauchbar ist das erfindungsgemäße Verfahren zur Herstellung von Polymerdispersionen, die als Hauptbestandteil Acrylate und/oder Styrol enthalten, insbesondere solche, die 50 bis 100 Gew.-% Ester der Acryl- oder Methacrylsäure mit C₁-C₁₂-Alkanolen oder 50 bis 100 Gew.-% Styrol und gegebenenfalls Butadien einpolymerisiert enthalten.

Die nachfolgenden Beispiele erläutern die Erfindung ohne sie zu begrenzen. Von den Figuren zeigen:
- Figuren 1 bis 4: schematische Darstellung sinusoidaler Krümmungen,
- Figur 5: die Seitenansicht eines erfindungsgemäßen Reaktors in Form einer Wicklung um zwei Stäbe
- Figur 6: eine Aufsicht auf den Reaktor gemäß Figur 5
- Figur 7: einen erfindungsgemäßen Reaktor in Form einer Wicklung um sechs in einer Ebene angeordnete Stäbe
- Figur 8: eine Aufsicht auf den Reaktor gemäß Figur 7
- Figur 9: die Seitenansicht eines erfindungsgemäßen Reaktors in Form einer gegenüber Figur 5 modifizierten Wicklung um zwei Stäbe
- Figur 10: eine schematische Teilansicht eines erfindungsgemäßen Reaktors in Form einer Wicklung um 7 an den Ecken eines gleichseitigen Polygons angeordnete Stäbe
- Figur 11: eine schematische Aufsicht auf eine Wicklungsschleife gemäß Figur 10.
- Figur 12: eine Seitenansicht einer helikalen Wicklung gemäß Stand der Technik
- Figur 13: seine Seitenansicht einer helikalen Wicklung mit einem Knick um 90° gemäß Stand der Technik
- Figur 14: eine Seitenansicht einer helikalen Wicklung mit vier Knicken um 90° gemäß Stand der Technik
- Figur 15: eine graphische Darstellung, bei der die experimentell an einer Vorrichtung gemäß Erfindung und gemäß Stand der Technik bestimmte Bodenstein-Zahl gegen die Reynolds-Zahl aufgetragen ist
- Figur 16: eine Veranschaulichung der Fig. 15 durch Schattierung der Bandbreiten der experimentellen Ergebnisse
- Figur 17: eine graphische Darstellung der Verweilzeitverteilung bei dem Versuch gemäß Beispiel 3 im erfindungsgemäßen Rohrreaktor
- Figur 18: eine graphische Darstellung des Drehmoments (in Abhängigkeit von der Zeit) an dem im Vergleichsexperiment gemäß Beispiel 3 verwendeten Rührer.

In den Figuren 1 bis 4 sind beispielhaft unterschiedliche Möglichkeiten von sinusoidalen Krümmungen, die für den gekrümmten Reaktor geeignet sind, gezeigt. Es ist ersichtlich, daß das Verhältnis von R₁ zu R₂ (Amplitude zu Periodenlänge/4) in einem breiten Bereich variieren kann.

Die Figur 5 zeigt einen erfindungsgemäßen Reaktor in der einfachsten Ausführungsform als Wicklung. Der Reaktor umfaßt zwei zueinander parallele Stäbe 1. Um diese Stäbe ist ein Rohr so gewickelt, daß ein gekrümmter Reaktor 2 mit alternierender Krümmungsrichtung resultiert. Dies ist der Figur 6 deutlich zu entnehmen, d.h. die Figur 6 zeigt eine Wicklung in Form einer liegenden Acht. Der Abstand zwischen den beiden Stäben 1 entspricht dem etwa 1,5-fachen des Durchmessers des Reaktors 2. Der Reaktor hat einen Zulauf 3 und einen Ablauf 4, d.h. das Medium im Reaktor 2 fließt in aufsteigender Richtung.

Die Figur 7 zeigt eine weitere Ausbildungsform eines erfindungsgemäßen Reaktors. Sie umfaßt 6 Stäbe 1, um die ein Rohr 2 mit einem Zulauf 3 und einem Ablauf 4 so gewickelt ist, daß ein Geflecht um die Stäbe 1 entsteht, so daß ein Reaktor in Form einer Palisadenwand resultiert. Die Figur 8 zeigt, daß die Wicklung im wesentlichen dem in Figur 1 gezeigten Krümmungsverlauf entspricht.

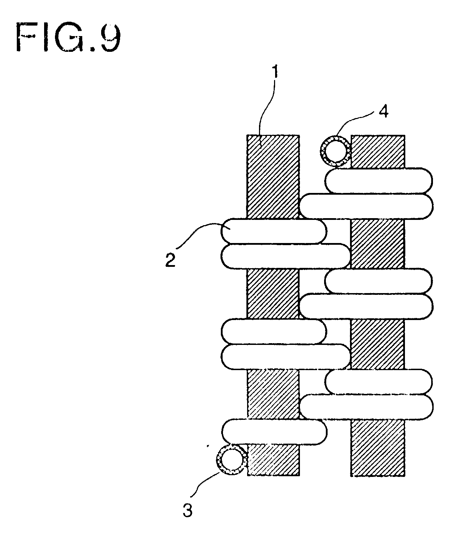

Die Figur 9 zeigt eine alternative Ausführungsform einer Wicklung um zwei Stäbe 1. Die Wicklung ist so geführt, daß der Krümmungsradius einer Krümmung ca 600° überstreicht.

Eine weitere Ausführungsform des erfindungsgemäßen Reaktors ist in Form einer Teilseitenansicht der Figur 10 zu entnehmen. Die Figur 11 zeigt eine einzelne Wicklungsschleife um sieben Stäbe 1, die an den Ecken eines gleichseitigen Siebenecks angeordnet sind. Die Stäbe 1 werden durchgehend mit einem Rohr 2 umwickelt, so daß eine korbartige Wicklung entsteht. Die Strömungsrichtung ist durch Pfeile angegeben. Diese Vorrichtung zeichnet sich durch eine kompakte Anordnung aus und ist daher zur industriellen Anwendung besonders geeignet.

### Beispiel 1

Es wurden Rohrreaktoren mit den in den Figuren 5 und 9 bis 14 gezeigten Wicklungskonfigurationen hergestellt. Die Figuren 12 bis 14 repräsentieren dabei den Stand der Technik, wie er eingangs beschrieben worden ist. Die Figuren 13 und 14 entsprechen der von Saxena in AIChE Journal Vol. 30, 1984, S. 363-368 beschriebenen Anordnung. Dazu wurde ein 50 m langer PVC-Gewebeschlauch mit einem Innendurchmesser von ca. 1 cm und einer Wandstärke von 3 mm verwendet. Der Rohrreaktor wurde in der in den erwähnten Figuren gezeigten Weise um Trägerrohre mit einem Außendurchmesser von 10,5 cm bzw. 7,5 cm gewickelt. Der Rohrreaktor besaß somit einen Krümmungsradius von etwa 6,05 cm bzw. 4,55 cm.

Mit diesen Reaktoren wurden die Verweilzeitdichtekurven durch Stoßmarkierungen von entionisiertem Wasser mit einer NaCl-Lösung und Messung des zeitlichen Konzentrationsverlaufes mit Leitfähigkeitsmeßzellen am Reaktoreingang und -ausgang bestimmt. Die Aufnahme der Signale erfolgte unter Zuhilfenahme einer AD-Wandlerkarte mit einem Personal Computer.

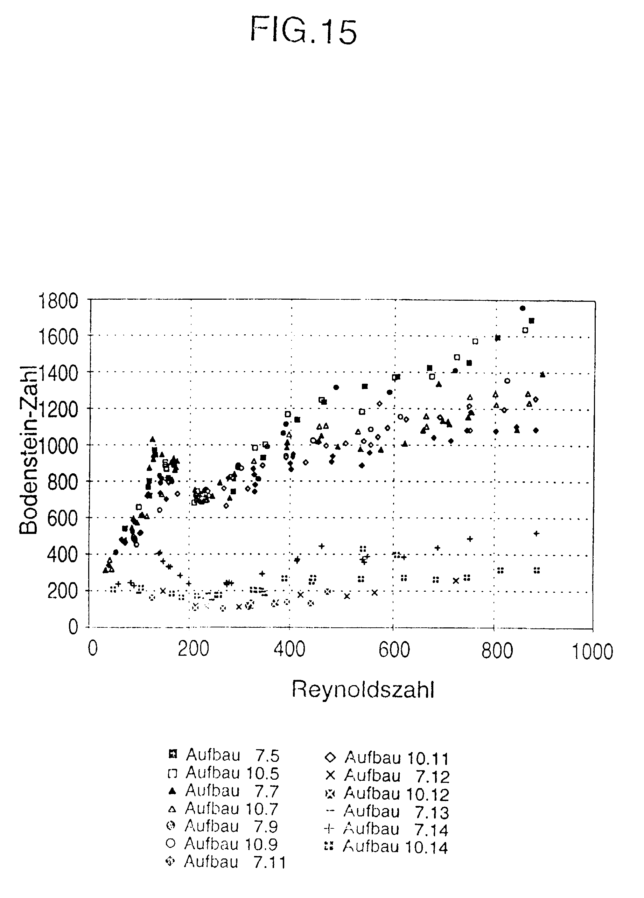

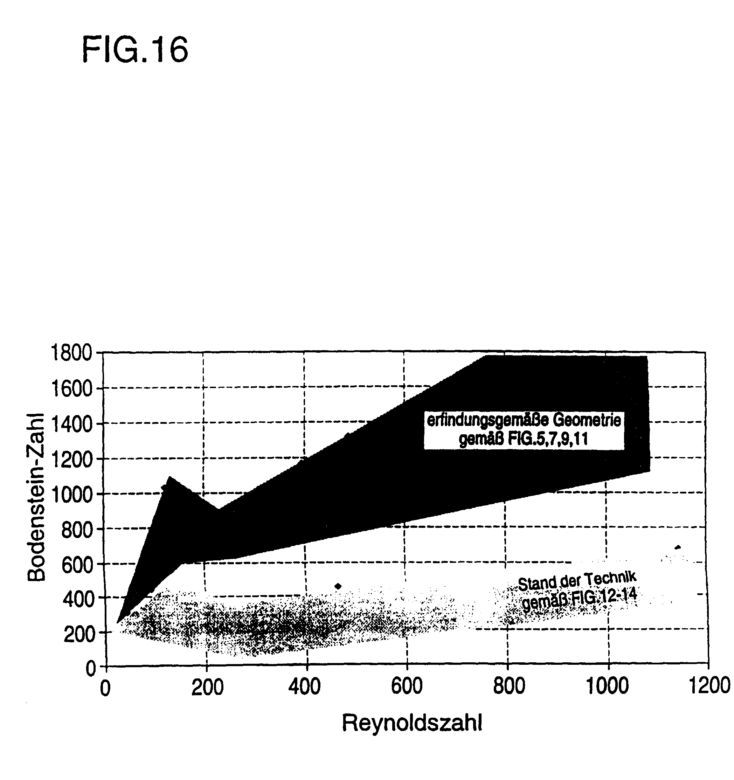

Aus den so ermittelten Verweilzeitdichtekurven lassen sich durch Anpassung eines Modells, wie des Dispersionsmodells (Chemical Reaction Engineering, Octav Levenspiel, Wiley & Sons, 1972), die charakteristischen Kenngrößen der Kurven bestimmen. Im Falle des Dispersionsmodells, erhält man eine dimensionslose Kennzahl, die Dispersionszahl, sowie die mittlere Verweilzeit. Der Kehrwert der Dispersionszahl wird als Bodenstein-Zahl bezeichnet, die das Verhältnis von konvektivem und konduktivem Stofftransport angibt. Um die verschiedenen Rohrreaktoren vergleichen zu können, wurde die Bodenstein-Zahl gegen die Reynolds-Zahl (Kennzahl) aufgetragen. Die Ergebnisse sind in den Figuren 15 und 16 graphisch dargestellt. Die Zuordnung der Versuchsergebnisse ist folgendermaßen zu verstehen:

Der Trägerrohrinnendurchmesser in cm ist vorangestellt und davon durch einen Punkt getrennt ist die Nummer der Figur, der die Wicklung entsprochen hat. Beispielsweise bedeutet demnach 7.12: Trägerrohrinnendurchmesser 7 cm, Wicklung gemäß Figur 12.

Die Ergebnisse zeigen, daß mit Hilfe des erfindungsgemäßen Reaktors überraschenderweise eine deutlich höhere Bodenstein-Zahl erreicht wird, als mit den Reaktoren gemäß Stand der Technik (Figuren 12 bis 14).

### Beispiel 2

Das Verhalten der erfindungsgemäßen Vorrichtung für Medien mit höheren Viskositäten wird im nächsten Beispiel gezeigt. Ein 50 m langer PVC-Gewebeschlauch mit einem Innendurchmesser von ca. 5 cm und einer Wandstärke von ca. 5 mm wurde in der in Figur 11 gezeigten Wicklungskonfiguration um Trägerrohre mit einem Aussendurchmesser von 16 cm gewickelt. Der Rohrreaktor besaß somit eine Krümmung von etwa 22 cm. Der Radius der Trägerrohrmittelpunkte betrug 28 cm. Mit diesem Reaktor wurden Verweilzeitverteilungen durch Stoßmarkierung von Lösungen aus Wasser und Polyethylenglykol mit identischen Lösungen, die zusätzlich KCl enthielten, durchgeführt. Die Messung des zeitlichen Korrelationsverlaufs und dessen Auswertung erfolgte analog zu der in Beispiel 1 erwähnten Weise. Die Ergebnisse sind in der Tabelle dargestellt.

| Viskositäten m² s⁻¹ | | | | | | | | | |
|---|---|---|---|---|---|---|---|---|---|
| 1,00 x 10⁻⁶ | | 2,25 x 10⁻⁶ | | 5,30 x 10⁻⁶ | | 9,50 x 10⁻⁶ | | 1,77 x 10⁻⁵ | |
| Re | Bo | Re | Bo | Re | Bo | Re | Bo | Re | Bo |
| 1575 | 576 | 723 | 383 | 438 | 341 | 219 | 226 | 126 | 150 |
| 1589 | 607 | 817 | 395 | 365 | 319 | 176 | 153 | 111 | 109 |
| 1817 | 619 | 944 | 434 | 229 | 219 | 160 | 128 | 97 | 73 |
| 717 | 424 | | | 307 | 252 | 130 | 104 | 87 | 50 |
| 1002 | 513 | | | 234 | 224 | 252 | 250 | 82 | 50 |
| 1226 | 523 | | | 223 | 224 | | | 76 | 46 |
| 1441 | 583 | | | | | | | 62 | 42 |
| 1570 | 613 | | | | | | | 61 | 32 |
| 1740 | 684 | | | | | | | | |
| 1981 | 719 | | | | | | | | |
| 2172 | 778 | | | | | | | | |
| 2201 | 811 | | | | | | | | |
| 2495 | 885 | | | | | | | | |
| 2941 | 1021 | | | | | | | | |
| Re = Reynoldszahl | | | | | | | | | |
| Bo = Bodensteinzahl | | | | | | | | | |

### Beispiel 3

In einem erfindungsgemäßen Rohrreaktor wurde eine Vernetzungsreaktion durchgeführt. Der Reaktor bestand aus einem 100 m langen PVC-Gewebeschlauch mit 10 mm Innen- und 16 mm Außendurchmesser. Dieser war stetig ansteigend auf ein Gerüst aus sieben Kernrohren in Form eines gleichseitigen Siebenecks mit je 75 mm Außendurchmesser gemäß Figur 11 aufgewickelt. Die Mittelpunkte der Kernrohre befanden sich auf einem Kreis mit einem Radius von 150 mm.

Zur Durchführung der Reaktion wurde aus einem Vorratstank bei Raumtemperatur eine Lösung (1) aus 4 Teilen Polyvinylalkohol, 96,16 Teilen Wasser und 0,16 Teilen Glutardialdehyd in den Reaktor gepumpt. Unmittelbar vor dem Reaktor wurde 26 %-ige Salpetersäure (2) mit einer separaten Pumpe zudosiert und mit Hilfe eines statischen Mischers eingemischt. Der statische Mischer bestand aus einem 200 mm langen Glasrohr mit 10 mm Durchmesser, gefüllt mit 4 mm Glas-Raschigringen. Das Verhältnis der Volumenströme betrug 169:1. Die Strömungsgeschwindigkeit wurde am Reaktorausgang durch Auslitern bestimmt und betrug (255 +/- 10) ml/min. Zur Messung der Viskosität am Reaktorausgang wurden Proben genommen und mit 4 molarer Natronlauge auf pH 10 eingestellt und so die Vernetzungsreaktion abgebrochen. Die Viskosität der Auslaufproben betrug (35 +/- 5) mm²/s. Die Viskosität der Polyvinylalkohollösung (1) betrug 12 mm²/s.

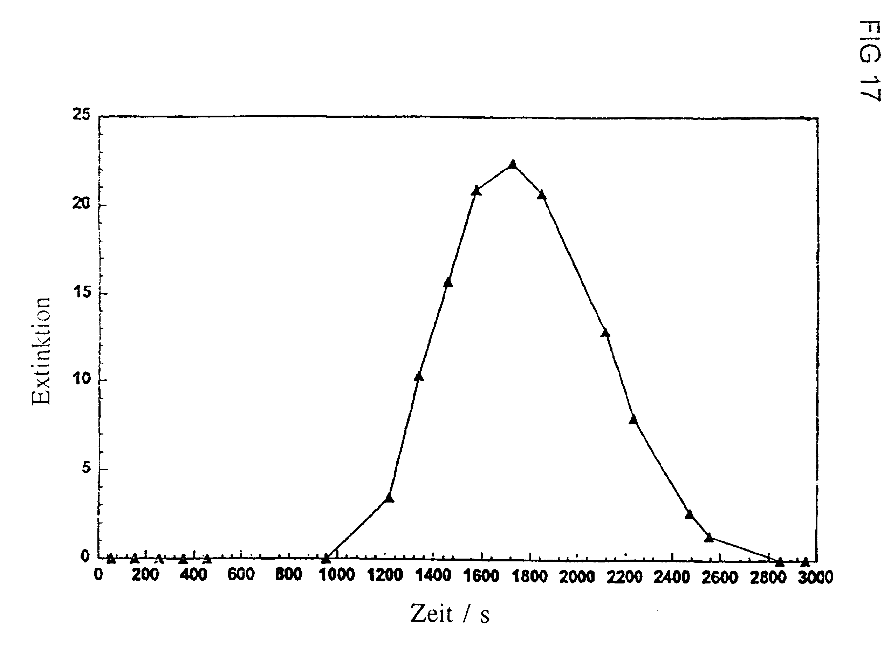

Zur Messung der Verweilzeitverteilung wurde im Laufe der Vernetzungsreaktion eine Stoßinjektion von 5 ml 2 molarer Kaliumthiocyanatlösung über ein Septum eingespritzt. Das Eingangssignal wurde mit einer Leitfähigkeitsmesszelle erfaßt und in einem Messdatenerfassungssystem gespeichert. Am Reaktorausgang wurden anschließend Proben von ca. 40 ml Volumen genommen und nicht abgestoppt. Diese wurden mindestens 10 Stunden gelagert; dabei reagiert das Polymer zu einem Gel aus. Danach wurde der Probe 5 ml polymerfreie Lösung entnommen, mit 1 ml 0,25 molarer Eisen(III)chlorid-Lösung versetzt und in einem Spektrometer bei einer Wellenlänge von 440 nm vermessen. Aus der Höhe dieses Signals wurde die Verweilzeitdichtekurve erhalten (Figur 17). Das Eingangs- und Ausgangssignal wurde analog zum vorherigen Beispiel auf Basis des Dispersionsmodells ausgewertet. Es wurde eine Bodensteinzahl von 59 ermittelt.

Während der gesamten Versuchszeit von 3,5 Stunden, d. h. ca. 7 mittleren Verweilzeiten von ca. 1800 s, wurde der Reaktor störungsfrei betrieben. Die gewünschte Vernetzung konnte gezielt durchgeführt werden. Ein Gelieren im Reaktor oder eine Bildung von Gelklumpen im Reaktorauslauf wurde nicht beobachtet.

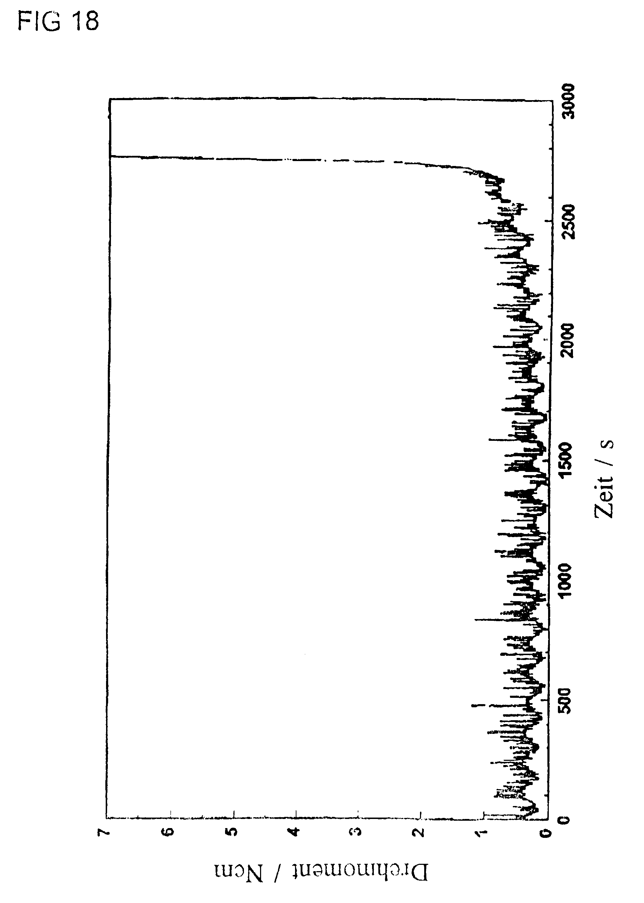

In einem Vergleichsexperiment wurde Lösung (1) in einem Batchrührkessel, mit Drehmomentmessung am Rührer zur Verfolgung der Viskosität, vorgelegt und stoßartig mit der zum vorherigen Beispiel analogen Menge Lösung (2) versetzt. Die dabei einsetzende Polymerisation führte zu einem erst langsamen und dann sehr steilen Viskositätsanstieg, erkennbar in Figur 18 am Drehmomentverlauf. Wird dieser Punkt in einem Reaktor erreicht, führt dies zur Bildung von Gelpartikeln und möglicherweise Totalverstopfung des Reaktors.

Aus dem Vergleich von Figur 17 und Figur 18 ist ersichtlich, dass die lange störungsfreie Betriebszeit des Rohrreaktors aus der Hydrodynamik und damit der Reaktorgeometrie resultiert.

## Patentansprüche

1. Gekrümmter rohrförmiger Durchflußreaktor (2) mit im wesentlichen kreisförmigem oder ellipsoidem Querschnitt, dadurch gekennzeichnet, daß er mehrere Krümmungen mit alternierender Krümmungsrichtung aufweist, wobei eine Änderung der Krümmungsrichtung spätestens dann erfolgt, wenn die ab Beginn einer Krümmung durchlaufene Strecke des Schwerpunktes der Rohrquerschnittsfläche das 200-fache des Rohrdurchmessers beträgt, wobei eine Krümmung bis zu drei Umläufe um die Krümmungsachse umfassen kann.

2. Reaktor nach Anspruch 1, dadurch gekennzeichnet, daß eine Umkehr der Krümmungsrichtung spätestens dann erfolgt, wenn die ab Beginn einer Krümmung durchlaufene Strecke des Schwerpunkts der Rohrquerschnittsfläche das 100-fache, insbesondere 70-fache, vorzugsweise 50-fache des Rohrdurchmessers beträgt.

3. Reaktor nach Anspruch 1 oder 2, dadurch gekennzeichnet, daß eine Umkehr der Krümmungsrichtung erfolgt, wenn die ab Beginn der Krümmung vom Schwerpunkt der Rohrquerschnittsfläche durchlaufene Strecke im Bereich des 10- bis 200-fachen, 10- bis 100-fachen, insbesondere 10- bis 70-fachen, vorzugsweise 10- bis 50-fachen und besonders bevorzugt 10- bis 30-fachen des Rohrdurchmessers liegt.

4. Reaktor nach Anspruch 1 oder 2, dadurch gekennzeichnet, daß er mindestens eine Einheit mit im wesentlichen sinusoidalen Krümmungen umfaßt.

5. Reaktor nach Anspruch 4, dadurch gekennzeichnet, daß das Verhältnis von Amplitude zu Periodenlänge/4 1:2 bis 1:20 beträgt.

6. Reaktor nach einem der vorhergehenden Ansprüche, dadurch gekennzeichnet, daß die Krümmung so ausgebildet ist, daß der Schwerpunkt der Rohrquerschnittsfläche pro Krümmung einen Halbkreis beschreibt.

7. Vorrichtung nach einem der vorhergehenden Ansprüche, dadurch gekennzeichnet, daß der Krümmungsradius das 0,5- bis 100-fache, insbesondere 1 bis 80-fache des Durchmessers der Rohrquerschnittsfläche beträgt.

8. Reaktor nach einem der vorhergehenden Ansprüche, dadurch gekennzeichnet, daß er als Wicklung um mindestens 2, im wesentlichen parallele Achsen, ausgebildet ist.

9. Reaktor nach Anspruch 8, dadurch gekennzeichnet, daß er als Wicklung um mehrere in einer Ebene angeordnete, im wesentlichen parallele Achsen, ausgebildet ist.

10. Reaktor nach Anspruch 8, dadurch gekennzeichnet, daß er als Wicklung um n im wesentlichen parallele, senkrecht durch die Ecken eines im wesentlichen gleichseitigen Polygons verlaufende Achsen ausgebildet ist, wobei n eine ungerade Zahl ≥ 3 ist.

11. Reaktor nach einem der Ansprüche 8 bis 10, dadurch gekennzeichnet, daß die Ganghöhe der Wicklung das 2- bis 10-fache des Rohrdurchmessers (bei kreisförmigem Rohrquerschnitt) bzw. der in Gangrichtung zeigenden Achse (bei ellipsoidem Rohrquerschnitt) beträgt.

12. Reaktor nach einem der Ansprüche 8 bis 11, dadurch gekennzeichnet, daß die Achsen durch Rohre oder Stäbe (1) gebildet sind.

13. Reaktor nach einem der Ansprüche 8 bis 11, dadurch gekennzeichnet, daß er in Form einer im wesentlichen selbsttragenden Wicklung vorliegt.

14. Verwendung eines Reaktors nach einem der Ansprüche 1 bis 13 zur Durchführung von chemischen Reaktionen in Flüssigphase, zur Herstellung von Mischungen und als Wärmetauscher.

15. Verfahren zur kontinuierlichen Flüssigphasenpolymerisation, insbesondere Suspensions- oder Emulsionspolymerisation, von mindestens einem ethylenisch ungesättigten Monomer, dadurch gekennzeichnet, daß man das Verfahren in einem Reaktor nach einem der Ansprüche 1 bis 13 durchführt.

16. Verfahren nach Anspruch 15, dadurch gekennzeichnet, daß man bei einer Strömung arbeitet, die durch eine Reynolds-Zahl im Bereich von 1 bis 10 000 charakterisiert ist.

17. Verfahren nach Anspruch 15 oder 16, dadurch gekennzeichnet, daß man bei der Herstellung eines Copolymerisats ein oder mehrere Comonomere an einer Stelle entlang des Reaktors zuspeist.

18. Verfahren nach einem der Ansprüche 15 bis 17, dadurch gekennzeichnet, daß man wenigstens ein Monomer verwendet, das ausgewählt ist unter Mono- oder Diolefinen, C₃-C₆-monoethylenisch ungesättigten Mono- oder Dicarbonsäuren oder Mono- oder Diestern davon mit C₁-C₁₈-Alkanolen oder -Diolen oder Amiden und N-Mono- oder N,N-Di-C₁-C₁₈-Alkylamiden davon, (Meth)Acrylnitril, vinylaromatischen Verbindungen, Vinyl-C₁-C₁₈-Alkylethern, Vinyl-C₁-C₁₈-Alkylestern, N-Vinyllactamen und Vinylhalogeniden.

19. Verfahren nach Anspruch 18, dadurch gekennzeichnet, daß das Monomer ausgewählt ist unter Ethylen, Propylen, Butadien, Acrylsäure, Methacrylsäure, C₁-C₁₂-Alkyl(meth)acrylaten, Acrylamid, Methacrylamid, Acrylnitril, Methacrylnitril, Styrol, α-Methylstyrol, Vinylethylether, Vinylacetat, Vinylpropionat, N-Vinylpyrrolidon und Vinylchlorid.

20. Verfahren nach einem der Ansprüche 15 bis 19, dadurch gekennzeichnet, daß man bei einer Temperatur im Bereich von 5 bis 250°C arbeitet.

21. Verfahren nach einem der Ansprüche 15 bis 20, dadurch gekennzeichnet, daß man die Polymerisation in wäßrigem oder organischem Medium durchführt.

## Claims

1. A curved tubular flow reactor (2) having an essentially circular or elliptical cross section, which comprises a plurality of bends having alternating directions of curvature, a change in the direction of curvature taking place at the latest when the distance which the center of gravity of the cross-sectional area of the tube has traversed from the start of a bend is 200 times the diameter of the tube, it being possible for a bend to comprise up to three circumvolutions around the axis of curvature.

2. The reactor as claimed in claim 1, wherein a reversal in the direction of curvature takes place at the latest when the distance which the center of gravity of the cross-sectional area of the tube has traversed from the start of a bend is 100 times, in particular 70 times, preferably 50 times the diameter of the tube.

3. The reactor as claimed in claim 1 or 2, wherein a reversal in the direction of curvature takes place when the distance which the center of gravity of the cross-sectional area of the tube has traversed from the start of the bend is in the range of from 10 to 200 times, from 10 to 100 times, in particular from 10 to 70 times, preferably from 10 to 50 times and especially preferably from 10 to 30 times the diameter of the tube.

4. The reactor as claimed in claim 1 or 2, which comprises at least one unit having essentially sinusoidal bends.

5. The reactor as claimed in claim 4, wherein the ratio of amplitude to period/4 is 1:2 to 1:20.

6. The reactor as claimed in any one of the preceding claims, wherein the shape of the bend is such that the center of gravity of the cross-sectional area of the tube describes a semicircle for each bend.

7. An apparatus as claimed in any one of the preceding claims, wherein the radius of curvature is from 0.5 to 100 times, in particular from 1 to 80 times the diameter of the cross-sectional area of the tube.

8. The reactor as claimed in any one of the preceding claims, which has the form of a winding around at least 2 essentially parallel arbors.

9. The reactor as claimed in claim 8, which has the form of a winding around a plurality of essentially parallel arbors arranged in one plane.

10. The reactor as claimed in claim 8, which has the form of a winding around n essentially parallel arbors running perpendicularly through the corners of an essentially equilateral polygon, n being an odd number ≥ 3.

11. The reactor as claimed in any one of claims 8 to 10, wherein the pitch of the winding is from 2 to 10 times the diameter of the tube (in the case of the cross section of the tube being circular) or of the arbor pointing in the direction of the pitch (in the case of the cross section of the tube being elliptical).

12. The reactor as claimed in any one of claims 8 to 11, wherein the arbors are formed by tubes or rods (1).

13. The reactor as claimed in any one of claims 8 to 11, which has the form of an essentially self-supporting winding.

14. The use of a reactor as claimed in any one of claims 1 to 13 for carrying out chemical reactions in the liquid phase, for preparing mixtures and as a heat exchanger.

15. A process for continuous liquid-phase polymerization, in particular suspension polymerization or emulsion polymerization, of at least one ethylenically unsaturated monomer, which process is carried out in a reactor as claimed in any one of claims 1 to 13.

16. The process as claimed in claim 15, wherein the operation involves a flow which is characterized by a Reynolds number in the range of from 1 to 10,000.

17. The process as claimed in claim 15 or 16, wherein the preparation of a copolymer involves one or more comonomers being fed in at a point along the reactor.

18. The process as claimed in any one of claims 15 to 17, wherein at least one monomer is used which is selected from among mono- or diolefins, C₃-C₆-monoethylenically unsaturated mono- or dicarboxylic acids or mono- or diesters thereof with C₁-C₁₈-alkanols or -diols or amides and N-mono- or N,N-di-C₁-C₁₈-alkylamides thereof, (meth)acrylonitrile, vinylaromatic compounds, vinyl-C₁-C₁₈-alkylethers, vinyl-C₁-C₁₈-alkylesters, N-vinyllactams and vinyl halides.

19. The process as claimed in claim 18, wherein the monomer is selected from among ethylene, propylene, butadiene, acrylic acid, methacrylic acid, C₁-C₁₂-alkyl (meth)acrylates, acrylamide, methacrylamide, acrylonitrile, methacrylonitrile, styrene, α-methylstyrene, vinyl ethyl ether, vinyl acetate, vinyl propionate, N-vinylpyrrolidone and vinyl chloride.

20. The process as claimed in any one of claims 15 to 19, wherein a temperature in the range of from 5 to 250°C is employed.

21. The process as claimed in any one of claims 15 to 20, wherein the polymerization is carried out in an aqueous or organic medium.

## Revendications

1. Réacteur tubulaire incurvé à passage direct (2), ayant une section transversale essentiellement circulaire ou ellipsoïdale, caractérisé en ce qu'il comporte plusieurs courbes, ayant des sens de courbure alternés, une modification du sens de courbure se produisant au plus tard quand la distance parcourue par le centre de gravité de la section transversale du tube à partir d'une courbure devient 200 fois plus grande que le diamètre du tube, une courbure pouvant comporter jusqu'à trois tours autour de l'axe de courbure.

2. Réacteur selon la revendication 1, caractérisé en ce qu'une inversion du sens de courbure a lieu au plus tard quand la distance parcourue par le centre de gravité de la section transversale du tube à partir d'une courbure devient 100 fois, en particulier 70 fois, de préférence 50 fois plus grande que le diamètre du tube.

3. Réacteur selon la revendication 1 ou 2, caractérisé en ce qu'une inversion du sens de courbure se produit quand la distance parcourue par le centre de gravité de la section transversale du tube à partir de la courbure est compris entre 10 et 200 fois, entre 10 et 100 fois, en particulier entre 10 et 70 fois, de préférence entre 10 et 50 fois et plus particulièrement entre 10 et 30 fois le diamètre du tube.

4. Réacteur selon la revendication 1 ou 2, caractérisé en ce qu'il comporte au moins une unité ayant des courbures essentiellement sinusoïdales.

5. Réacteur selon la revendication 4, caractérisé en ce que le rapport de l'amplitude au quart de la longueur de la période est de 1:2 à 1:20.

6. Réacteur selon l'une des revendications précédentes, caractérisé en ce que la courbure est configurée de façon que le centre de gravité de la section transversale du tube décrive un demi-cercle par courbure.

7. Appareil selon l'une des revendications précédentes, caractérisé en ce que le rayon de courbure est de 0,5 à 100 et en particulier de 1 à 80 fois le diamètre de la section transversale du tube.

8. Réacteur selon l'une des revendications précédentes, caractérisé en ce qu'il est configuré comme un enroulement autour d'au moins deux axes essentiellement parallèles.

9. Réacteur selon la revendication 8, caractérisé en ce qu'il est configuré comme un enroulement autour de plusieurs axes essentiellement parallèles et disposés dans un plan.

10. Réacteur selon la revendication 8, caractérisé en ce qu'il est configuré comme un enroulement autour de n axes essentiellement parallèles, passant perpendiculairement par les sommets d'un polygone essentiellement régulier, n étant un nombre impair ≥ 3.

11. Réacteur selon l'une des revendications 8 à 10, caractérisé en ce que le pas de l'enroulement est de 2 à 10 fois le diamètre du tube (dans le cas d'une section transversale circulaire du tube) ou l'axe dirigé dans la direction du pas (dans le cas d'une section transversale ellipsoïdale du tube).

12. Réacteur selon l'une des revendications 8 à 11, caractérisé en ce que les axes sont constitués de tubes ou de barres (1).

13. Réacteur selon l'une des revendications 8 à 11, caractérisé en ce qu'il se présente sous la forme d'un enroulement essentiellement autoportant.

14. Utilisation d'un réacteur selon l'une des revendications 1 à 13 pour mettre en oeuvre des réactions chimiques en phase liquide, pour préparer des mélanges et en tant qu'échangeurs de chaleur.

15. Procédé de polymérisation continue en phase liquide, en particulier de polymérisation en suspension ou en émulsion, d'au moins un monomère à insaturation éthylénique, caractérisé en ce qu'on met en oeuvre le procédé dans un réacteur selon l'une des revendications 1 à 13.

16. Procédé selon la revendication 15, caractérisé en ce qu'on travaille avec un écoulement caractérisé par un nombre de Reynolds compris entre 1 et 10 000.

17. Procédé selon la revendication 15 ou 16, caractérisé en ce que, lors de la préparation d'un copolymère, on introduit un ou plusieurs comonomères en un point le long du réacteur.

18. Procédé selon l'une des revendications 15 à 17, caractérisé en ce qu'on utilise au moins un monomère qui est choisi parmi les mono- ou les dioléfines, les acides mono- ou dicarboxyliques à insaturation monoéthylénique en C₃-C₆ ou leurs mono- ou diesters avec des alcanols ou diols en C₁-C₁₈, ou leurs amides et N-mono- ou N,N-di(alkyle en C₁-C₁₈)amides, le (méth)acrylonitrile, les composés vinylaromatiques, les oxydes de vinyle et d'alkyle en C₁-C₁₈, les esters vinyl(alkyliques en C₁-C₁₈), les N-vinyllactames et les halogénures de vinyle.

19. Procédé selon la revendication 18, caractérisé en ce que le monomère est choisi parmi l'éthylène, le propylène, le butadiène, l'acide acrylique, l'acide méthacrylique, les (méth)acrylates d'alkyle en C₁-C₁₂, l'acrylamide, le méthacrylamide, l'acrylonitrile, le méthacrylonitrile, le styrène, l'α-méthylstyrène, le vinyléthyléther, l'acétate de vinyle, le propionate de vinyle, la N-vinylpyrrolidone et le chlorure de vinyle.

20. Procédé selon l'une des revendications 15 à 19, caractérisé en ce qu'on travaille à une température comprise entre 5 et 250°C.

21. Procédé selon l'une des revendications 15 à 20, caractérisé en ce qu'on met en oeuvre la polymérisation en milieu aqueux ou organique.
